# EUROPEAN PATENT APPLICATION

(11) **EP 1 209 440 A2**
(43) Date of publication of application: **29.05.2002**
(21) Application number: 01309624.3
(22) Date of filing: 14.11.2001
(51) Int. Cl.: G01B 7/00

(54) **Contact detecting apparatus for electric discharge machine**

(30) Priority: 20.11.2000 JP 2000352909
(71) Applicant: FANUC LTD, Minamitsuru-gun, Yamanashi 401-0597 (JP)
(72) Inventor: Murai, Masao, Fanuc Manshonharimomi, Minamitsuru-gun, Yamanashi, 401-0511 (JP); Sakurai, Akihiro, Fanuc Dai3Virakaramatsu, Minamitsuru-gun, Yamanashi, 401-0511 (JP); Kawahara, Akiyoshi, Fanuc Manshonharimomi, Minamitsuru-gun, Yamanashi, 401-0511 (JP)
(74) Representative: Billington, Lawrence Emlyn

(57) **Abstract**

A voltage application is performed between an electrode (1) and a material (2) to be machined (or, in an inter-electrode) periodically. A voltage comparing device (42) compares the voltage of the inter-electrode with a reference voltage to output the comparison result to a contact determining device (43). The contact determining device (43) accumulates this signal for a predetermined time to compare the accumulated time with another reference value, so that a determination about contact/non-contact of the electrode (1) (or the tool electrode) and the material (2) to be machined (or the work) is made.

## Description

The present invention relates to a contact detecting apparatus which detects contact of such an electrode as, for example, a tool electrode in an electric discharge machine with an object such as a material to be machined in the electric discharge machine.

In general, in an electric discharge machine where machining is performed while a relative position between a tool electrode and a material to be machined is controlled, it is necessary to grasp a position (relative position) of the material to be machined with respect to the tool electrode accurately. As a machine meeting such a requirement, there has been conventionally known an electric discharge machine where a material to be machined is moved relative to a tool electrode to be brought into contact therewith, and a position of the material to be machined with respect to the tool electrode at the time of the contact is set as a reference for positioning. In a wire electric discharge machine, especially, since a wire electrode which is a tool electrode is elastic and damage to both the wire electrode and a material to be machined, due to contact of the wire electrode with the material to be machined, is reduced, such a positioning process is often utilized.

Also, in addition to the positioning, for example, in such a case where a start of machining is allowed only when the tool electrode and the material to be machined are not put in a contacting state with each other at a starting point of machining, it is required in some cases to simply determine whether or not both the tool electrode and the material to be machined are put in a contacting state with each other at the current position, without moving them relatively.

Even in either of these cases, it is an ordinary process in a prior art that a contact detection is performed not during electric discharge machining but during non-machining, in which, in a state where a power supply for electric discharge machining is separated from an inter-electrode constituted by a tool electrode and a material to be machined, a voltage for contact detection is applied to the inter-electrode by voltage applying means provided separately to detect an inter-electrode voltage so that a determination is made about whether or not the tool electrode and the material to be machined are put in a contacting state with each other.

Regarding a case where a contact detecting apparatus is applied to a wire electric discharge machine which machines a material to be machined (hereinafter, referred to as work) utilizing a wire electrode (hereinafter, referred to as wire) as a tool electrode, an example of an ordinary system configuration and a prior art will be explained below.

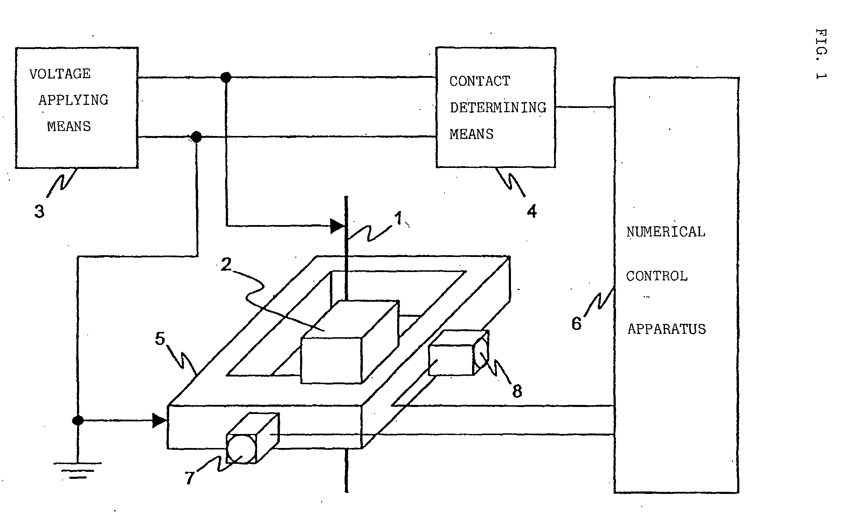

Fig. 1 is a block diagram showing a main portion of an ordinary system configuration in a case where positioning is performed by applying a contact detecting apparatus to a wire electric discharge machine. In Fig. 1, reference numeral 1 denotes a wire, 2 denotes a work, 3 denotes voltage applying means which applies voltage to an inter-electrode constituted by the wire 1 and the work 2 for contact detection, 4 denotes contact determining means which determines contact by detecting a voltage of the inter-electrode, 5 denotes a movable table which fixes the work 2 and is put in a conductive state to the work 2, and 6 denotes a numerical control apparatus. Furthermore, reference numerals 7 and 8 denote servo-motors which move the movable table 5 on the basis of an instruction from the numerical control apparatus 6.

In an actual wire electric discharge machine, a machining power supply for electric discharge machining is connected to the inter-electrode. However, in the following explanation, it is assumed that the machining power supply for electric discharge machining is disconnected from the inter-electrode during a contact detection.

When a relative position of the work 2 to the wire 1 is determined using a contact detecting apparatus, the numerical control apparatus 6 outputs an applying instruction to the voltage applying means 3 so as to apply a voltage for contact detection to the inter-electrode and it outputs a feeding instruction to the servo-motors 7 and 8 to move the work 2 relative to the wire 1 thereby bringing the work 2 in contact with the wire 1.

When the movable table 5 is moved according to rotations of the servo-motors 7 and 8 so that the work 2 fixed to the movable table 5 is brought in contact with the wire 1, the contact determining means 4 determines such a contact. The contact determining means 4 determines contact or non-contact of the inter-electrode by utilizing the fact that, when the work 2 is in contact with the wire 1, a voltage applied by the voltage applying means 3 does not appear in the inter-electrode, but when the work 2 is not in contact with the wire 1, a voltage applied by the voltage applying means 3 appears in the inter-electrode.

When the numerical control apparatus 6 receives a signal notifying a contact of the inter-electrode, or the work 2 and the wire 1, from the contact determining means 4, it instructs the servo-motors 7 and 8 to stop feeding so that a positioning operation is completed.

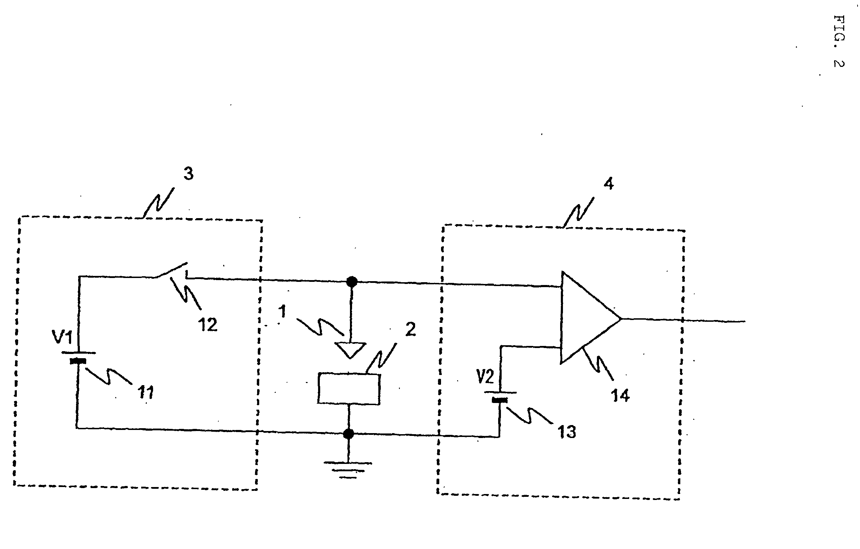

Fig. 2 is a circuit diagram for explaining an inside of the voltage applying means 3 and the contact determining means 4 shown in Fig. 1, in which a simple example for conducting contact detection is shown. Reference numerals 11 and 13 denote direct current sources, respectively, 12 denotes a switch, and 14 denotes a comparator. When a contact detection is performed, the switch 12 is closed so that a direct voltage V1 from the direct current source 11 is applied to the inter-electrode constituted by the wire 1 and the work 2.

The comparator 14 generates a signal notifying the inter-electrode in contacting state only when the voltage of the inter-electrode is lower than a reference voltage V2 applied by the direct current source 13.

In many cases, since electric discharge machining is conducted in water, there often occurs a case where water is interposed between the electrodes at a time of contact detection. For this reason, when a direct current voltage is applied from the voltage applying means 3 in a state where the wire 1 and the work 2 are close to each other or they are in contact with each other, rust or electrolytic covering or film occurs on a surface of the wire 1 or the work 2 due to electrolytic action, thereby reducing a contact detection accuracy. In order to suppress such a reduction of detection accuracy, it is preferable that, in a voltage applied from the voltage applying means 3, its average voltages at both polarities are equal to each other.

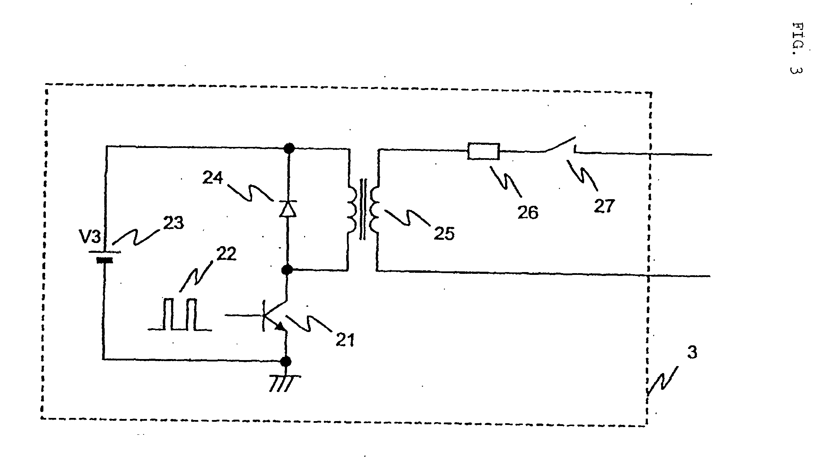

Fig. 3 is a circuit diagram for explaining a contact detecting apparatus disclosed in Japanese Patent Application Laid-Open (JP-A) No. 60-29246 as one satisfying such a requirement, which corresponds to the portion of voltage applying means 3 shown in Fig. 1. In Fig. 3, reference numeral 21 denotes a transistor, 22 denotes an oscillating signal turning on/off the transistor 21, 23 denotes a direct current source, 24 denotes a diode, 25 denotes a pulse transformer, 26 denotes a resistor for limiting current, and a 27 denotes a switch for disconnecting a voltage applying device from the wire 1.

When the switch 27 is closed at a time of contact detection and an oscillation signal 22 is input into the base of the transistor 27, on/off of the transistor 21 is repeated so that current flows to the primary side of the pulse transformer 25 and a pulse-like voltage with both polarities occurs at the secondary side thereof. A counter electromotive voltage occurring at the primary side of the pulse transformer 25 when the transistor is turned off is clamped by the diode 24 on the primary side. For this reason, a voltage appearing at the secondary side of the pulse transformer 25 becomes an asymmetrical pulse-like voltage where a peak of one of polarities is high and another peak of the other is low.

Even in this case, an average voltage becomes "0" necessarily owing to action of the pulse transformer 25. That is, by using this means, it becomes possible to generate a pulse-like voltage where positive and negative average voltages are equal to each other at both polarities.

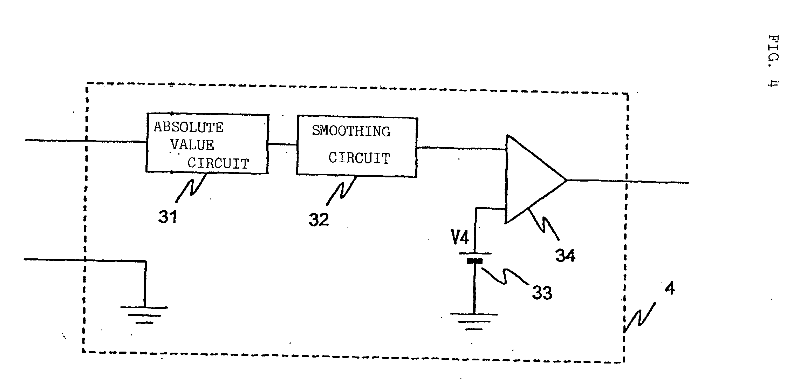

Next, Fig. 4 is a circuit diagram for explaining the contact detecting apparatus disclosed in JP-A No. 60-29246 described above, which corresponds to the contact determining means 4 shown in Fig. 1. In Fig. 4, reference numeral 31 denotes an absolute value circuit, 32 denotes a smoothing circuit, 33 denotes a direct current source, and 34 denotes a comparator. The absolute value circuit 31 reverses a negative side voltage of the pulse-like voltage with both polarities applied to an inter-electrode by the voltage applying means 3 to a positive side voltage for addition. The smoothing circuit 32 smoothes a pulsating current obtained from the absolute value circuit 31.

An output of the smoothing circuit 32 becomes a predetermined voltage in a non-contacting state of the inter-electrode while it becomes "0" in a contacting state thereof. A reference voltage V4 is set to a value lower than a voltage obtained at the non-contacting state of the inter-electrode. The comparator 34 generates a signal notifying that the inter-electrode is in a contacting state only when an output of the smoothing circuit 32 is lower than the reference voltage V4 obtained from the direct current source 33.

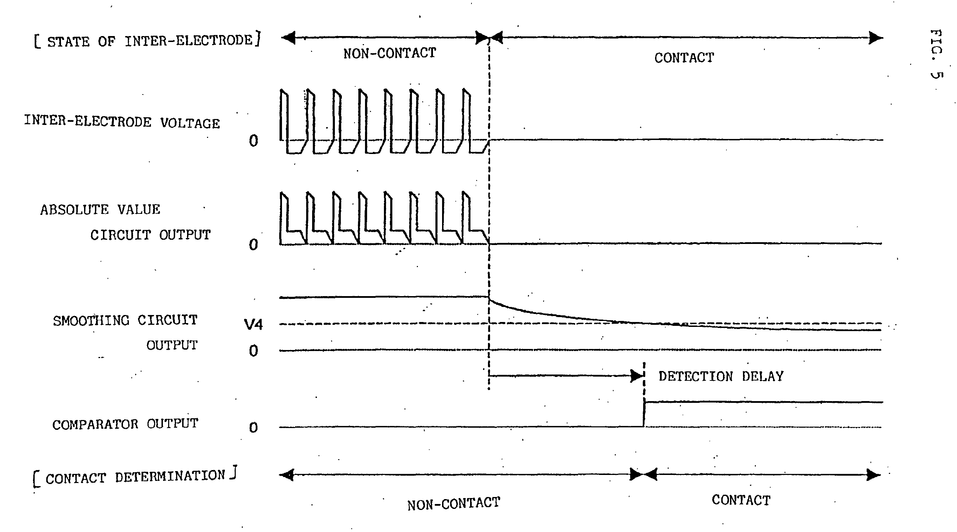

Fig. 5 is a diagram for explaining a contact detecting operation of the contact detecting apparatus using voltage waveforms of circuit main portions shown in Fig. 4, where each horizontal axis represents a time lapse. When positioning is performed with the contact detecting apparatus, the inter-electrode is transited from a non-contact state to a contacting state. As shown as "INTER-ELECTRODE STATE" in Fig. 5, the inter-electrode is transited from "non-contact" state to "contacting" state at a time when a certain time is elapsed from a time point of voltage applying start. Also, as shown with "ABSOLUTE VALUE CIRCUIT OUTPUT" in Fig. 5, the inter-electrode voltage becomes a pulsating voltage where the negative side voltage is folded back to a positive side with respect to 0V by the absolute value circuit 31 of the contact determining means 4 described in Fig. 4.

The smoothing circuit 32 smoothes an output of the absolute value circuit 31. The comparator 34 compares the output of the smoothing circuit 32 with the reference voltage V4, and it outputs a signal notifying that the inter-electrode is in contacting state only when the output of the smoothing circuit 32 is lower than the reference. voltage V4. Incidentally, a time constant of the smoothing circuit 32 is set to a sufficient large magnitude so as not to make an erroneous determination as a contacting state at a pause time of an application pulse or a low voltage application time.

As understood from the above explanation, in the conventional contact detecting apparatus, since the output of the smoothing circuit is compared with the reference voltage, it is inevitable that a time lag occurs until an actual transition of the inter-electrode appears as the contact detection result. Particularly, when the frequency of an applying voltage is reduced in order to abbreviate damage to the inter-electrode, it becomes necessary to set the time constant of the smoothing circuit to a very large value for avoiding an erroneous determination as a contacting state at the pause time of an application pulse or at a low voltage application time.

Therefore, in a case where a positioning for contact has actually been performed using the contact detecting apparatus, such a tendency becomes stronger that the positioning operation is completed after the wire has bitten the work, so that it has been difficult to perform an accurate positioning.

Also, even when the inter-electrode is in a complete non-contact state, the output of the smoothing circuit fluctuates due to change in leak current in the inter-electrode or change in peak value of an application pulse (voltage fluctuation due to a first factor). For this reason, the reference voltage of the comparator must be set to such a value that the voltage fluctuation due to the first factor which does not pertain to the contacting state of the inter-electrode is not affected.

On the other hand, when the wire and the work are opposed to each other with a slight distance or interval, there occurs a case where contact and non-contact are repeated due to vibrations of the wire or the like for a short period and the output of the smoothing circuit also fluctuates due to the frequency of contact of the inter-electrode (voltage fluctuation due to a second factor).

Since the frequency of contact is increased according to reduction in inter-electrode distance, or distance between the electrodes, the voltage fluctuation due to the second factor represents a fine change of the inter-electrode distance. Therefore, in order to achieve a contact detection with a high accuracy, it is necessary to set the reference value of the comparator with these factors.

In the conventional contact detecting apparatus, however, any reasonable countermeasure has not been known other than the method where the reference voltage of the comparator is set to an appropriate value lower than a voltage in a non-contact state of the inter-electrode. In this connection, there has not been proposed any technique providing a satisfactory solving method.

Even if the reference voltage of the comparator is variable, it is actually difficult to set the reference voltage to an optimal one considering the voltage fluctuation due to the first and second factors. For this reason, it is impossible to perform a contact detection with a high accuracy.

Such a problem is not limited to electric discharge machines, but it occurs in any contact detecting apparatus of a type where an object and an electrode movable relative to the object constitute an inter-electrode and a determination is made about contact/non-contact of the both.

An object of the present invention is to provide a contact detecting apparatus which reduces damage to an electrode or a work (one of objects constituting an inter-electrode), and which has a fast detecting speed and a high detection accuracy.

According to a first aspect of the invention, a contact detecting apparatus which includes an object and an electrode movable relative to the object, the object and the electrode constituting an inter-electrode, according to the present invention, comprises: voltage applying means applying a pulse-like voltage to the inter-electrode periodically; voltage comparing means which compares a voltage of the inter-electrode with a predetermined reference voltage to output an output signal corresponding to the comparison result; and contact determining means which monitors the output signal of the voltage comparing means for a predetermined time, clocks and accumulates the time when the output signal is being outputted, and compares the accumulated time with a predetermined reference time so that a determination is made about contact/non-contact of the electrode and the object.

According to a second aspect of the invention, a contact detecting apparatus for an electric discharging machine where a material to be machined is machined using a tool electrode, according to the present invention, comprises: voltage applying means which applies a pulse-like voltage to an inter-electrode periodically; voltage comparing means which compares a voltage of the inter-electrode between the tool electrode and the material to be machined with a predetermined reference voltage to output an output signal corresponding to the. comparison result; and contact determining means which monitors the output signal of the voltage comparing means for a predetermined time, clocks and accumulates a time representing an outputting state or a second state where the output signal is being outputted, and compares the accumulated time with a predetermined reference time so that a determination is made about contact/non-contact of the tool electrode and the material to be machined.

Here, it is preferable that at least one of the reference voltage and the reference time is set to be variable.

In the present invention, a pulse-like voltage is applied to the inter-electrode periodically, and the voltage in the inter-electrode is compared with the predetermined reference voltage. An output signal is outputted corresponding to the comparison result (determination about whether the voltage is higher than or lower than the reference voltage). Here, the comparison result indicates discrimination between "equal to or higher than the reference voltage" and "lower than the reference voltage".

The output signal is monitored for the predetermined time, a time when the output signal (output indicating any one of the comparison results) is being outputted is clocked and accumulated, and the accumulated time is compared with the reference time, so that a determination about contact/non contact of the electrode (the tool electrode in the case of the electric discharge machine) and the object (the material to be machined in the case of the electric discharge machine) is made. For example, in a case where a time when an output signal indicating "the state where the inter electrode voltage is equal to or higher than the reference voltage" is being outputted is accumulated, a determination is made as "non-contact" when the accumulated time value is equal to or more than the reference time (or exceeds it), while a determination is made as "contact" when the accumulated time value is less than the reference time.

Since the present invention is configured such that the pulse-like voltage is applied to the inter-electrode periodically, the inter-electrode voltage is compared with the predetermined reference voltage, the signal obtained by the voltage comparison is accumulated for the predetermined time, and the accumulated time is compared with the predetermined time so that a determination about contact/non-contact of the inter-electrode (between the tool electrode and the material to be machined in the electric discharge machine) is made, delay in detection is reduced even in the case where the frequency of application of the pulse-like voltage is reduced in order to alleviate damage to the object and the electrode (or the tool electrode and the material to be machined in the electric discharge machine) constituting the inter-electrode.

Also, such an effect can be obtained that, even in such an unstable state where intermittent contact is repeated in the inter-electrode, a determination about contact with the contact frequency can be made so that the accuracy of contact detection can remarkably be improved.

### BRIEF DESCRIPTION OF THE DRAWINGS

The above-mentioned and other features of embodiments of the present invention will become apparent from the following explanation about embodiments with reference to the accompanying drawings, in which:
Fig. 1 is a block diagram showing a main portion of an ordinary system configuration employed when a contact detecting apparatus is applied to a wire electric discharge machine to perform positioning;
Fig. 2 is a circuit diagram of respective voltage applying means and contact determining means in Fig. 1;
Fig. 3 is a circuit diagram of voltage applying means employed in a contact detecting apparatus in a prior art;
Fig. 4 is a circuit diagram of contact determining means employed in the contact detecting apparatus in the prior art;
Fig. 5 is a diagram for explaining a contact detecting operation in the contact detecting apparatus;
Fig. 6 is a diagram showing a schematic system configuration employed in a case where a contact detecting apparatus according to the present invention is applied to a wire electric discharge machine to perform positioning;
Fig. 7 is a circuit diagram of voltage comparing means employed in the contact detecting apparatus shown in Fig. 6;
Fig. 8 is a circuit diagram of contact determining means employed in the contact detecting apparatus shown in Fig. 6;
Fig. 9 is a first time chart for explaining a contact detecting operation by the contact detecting apparatus according to the present invention; and
Fig. 10 is a second time chart for explaining a contact detecting operation by the contact detecting apparatus according to the present invention.

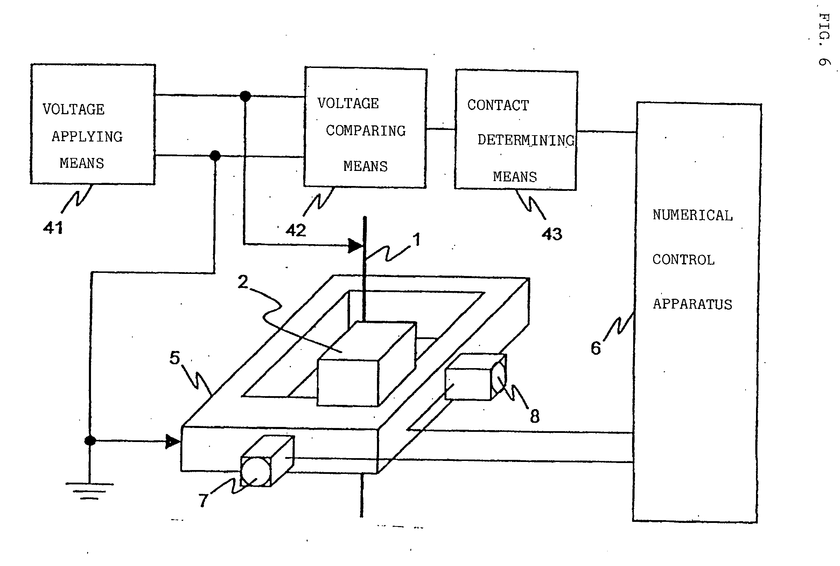

Fig. 6 shows one embodiment of the present invention, which illustrates a schematic system configuration employed when a contact detecting apparatus is applied to a wire electric discharge machine to perform positioning. In the Figure, elements or parts provided as elements or parts common to the configuration shown in Fig. 1 or corresponding thereto are attached with the same reference numerals as those in Fig. 1.

In Fig. 6, reference numeral 41 denotes voltage applying means which applies a pulse-like voltage to an inter-electrode periodically, 42 denotes voltage comparing means which compares the voltage of the inter-electrode with a predetermined reference voltage, and 43 denotes contact determining means which monitors an output signal of the voltage comparing means for a predetermined time, and clocks and accumulates time where the output signal is outputted to compare the accumulated time with a predetermined reference time, thereby making a determination about contact/non-contact of a tool electrode and a material to be machined, respectively.

As a specific example of the voltage applying means 41, a circuit shown in Fig. 3 and described in "Description of the Prior Art" section is adopted. According to this embodiment, the circuit configuration shown in Fig. 3, a duty of an oscillation signal 22 to be inputted in the base of the transistor 22 is reduced so that a pulse-like voltage with a low application frequency to the secondary side is generated periodically. As mentioned above, the voltage becomes a pulse-like voltage with equal voltage magnitudes at both polarities. However, in a case where a contact detection is performed in oil or air, an electrolytic action does not occur so that it is not required necessarily that positive and negative average voltage magnitudes at both polarities are equal to each other.

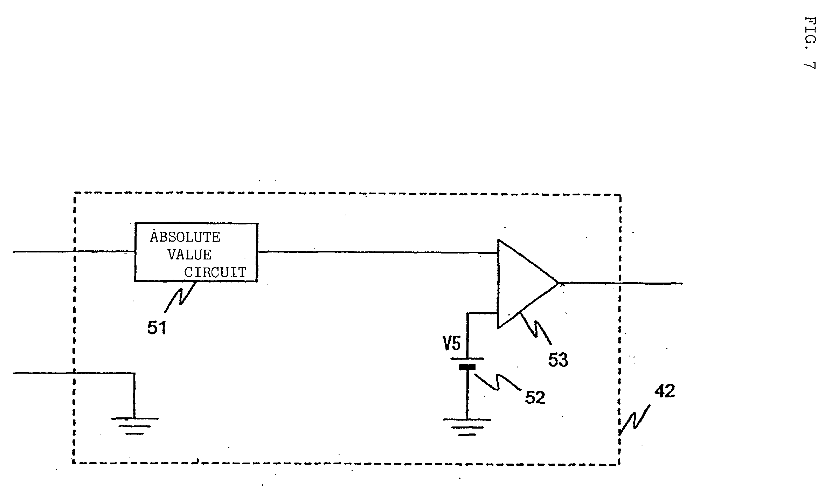

As the voltage comparing means shown in Fig. 6, the voltage comparing means 42 of the circuit shown in Fig. 7 can be employed. In Fig. 7, reference numeral 51 denotes an absolute value circuit, 52 denotes a direct current source, and 53 denotes a comparator. The absolute value circuit 51 reverses a negative side voltage of a pulse-like voltage with both polarities applied to the inter-electrode by the voltage applying means 41 with respect to 0V. The comparator 53 compares the output of the absolute value circuit 51 with a reference voltage V5. Then, only when the output of the absolute value circuit 51 is higher than the reference voltage V5, the comparator 53 outputs a signal notifying that the inter-electrode is not in contacting state.

It is to be noted that the output of the absolute value circuit 51 may fluctuate due to change in leak current in the inter-electrode or change in peak value of an application pulse (that is, due to the first factor mentioned above) even when the inter-electrode is in a complete non-contact state. Therefore, the reference voltage V5 of the comparator 53 is set to a value which is not affected by the voltage fluctuation due to the first factor which does not pertain to a contact state of the inter-electrode. Thereby, the degradation in accuracy of the contact detection due to voltage fluctuation unrelated with change in contact state of the inter-electrode can easily be prevented.

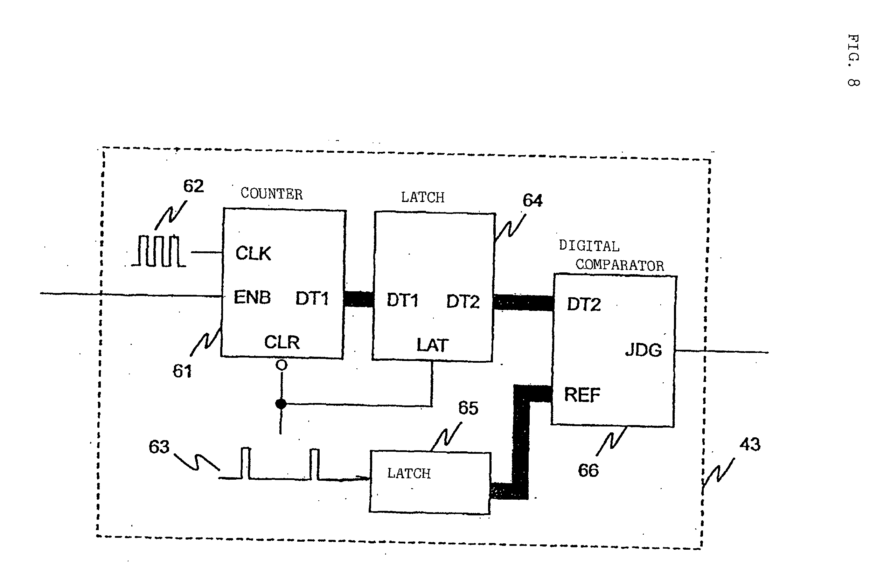

Next, as the contact determining means 43 shown in Fig. 6, a circuit shown in Fig. 8 can be employed. In Fig. 8, reference numeral 61 denotes a counter. The counter 61 is a synchronous type counter which receives "a signal notifying that the inter-electrode is not in a contact state" obtained by the voltage comparing means 42 to clock and accumulate "time (period) when this signal is being inputted" with time resolution of a clock 62, and the clocked and accumulated value is outputted as binary digital data DT1.

On the other hand, the counter 61 is initialized by a falling-down of a determination cyclic pulse 63 generated for each determination cycle set separately, and it restarts another counting and accumulating operation at that time. Then, reference numeral 64 denotes a latch which preserves output data with the rising-up of the determination cyclic pulse 63 to continue to output the data until the next rising-up of the pulse.

Furthermore, reference numeral 66 denotes a digital comparator, and 65 denotes a latch which preserves a proper value for applying digital time data to the digital comparator 66 in advance. The digital comparator 66 compares the binary digital data DT2 preserved in the latch 64 with preset reference time data REF, and it outputs a signal notifying that the inter-electrode is in a contact state only when the DT2 is smaller than the REF.

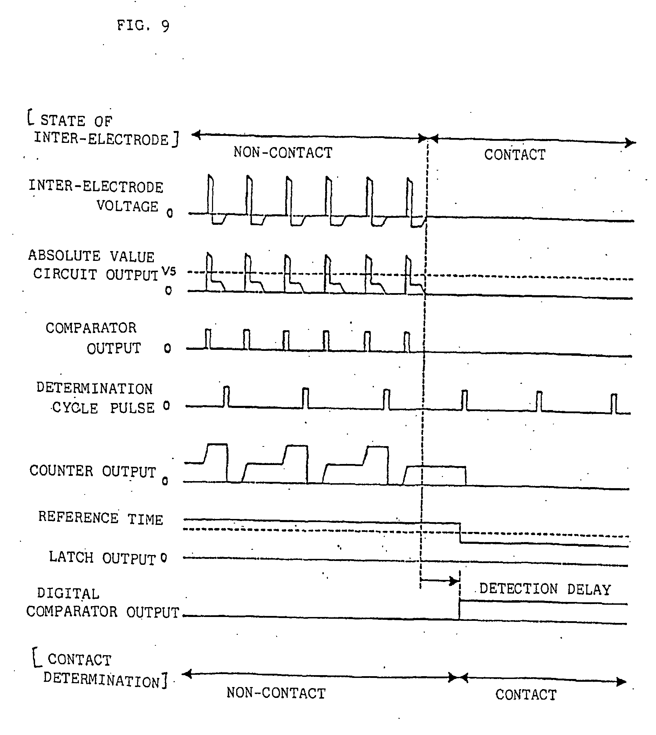

Fig. 9 is a time chart for explaining a contact detecting operation of the contact detecting apparatus of the present embodiment using voltage waveforms of circuit main portions shown in Fig. 7 and 8, which corresponds to Fig. 5 described in "Description of the Prior Art" section. As shown in this time chart, the voltage of the inter-electrode becomes a pulsating voltage whose negative side voltage has been folded back to the positive side with respect to 0V by the absolute value circuit 51 of the voltage comparing means 42 described in Fig. 7.

The comparator 53 compares the output of the absolute value circuit 51 with the reference voltage V5, and it outputs a signal only when the output of the absolute value circuit 51 is higher than the reference voltage V5. It should be noted that the output of the comparator 53 is hardly delayed from a change in the inter-electrode voltage as the smoothing circuit existing in the prior art is not provided in this embodiment. The cycle of determination cyclic pulse 63 may be a cycle equal to or more than the voltage applying cycle. Fig. 9 illustrates a case where the determination cycle pulse 63 is set to twice the voltage applying cycle or so.

The output of the counter 61 increases only while the output of the comparator 53 is being inputted into the counter 61, but the output of the counter 61 preserves a current value without change when the input into the counter 61 is interrupted or stopped. When input into the counter 61 starts again, the output of the counter 61 is further increased.

When the determination cyclic pulse 63 is input, the counter 61 is initialized with the falling-down of the pulse, and it restarts counting from 0. The digital data of the counter output is preserved in the latch 64 with the rising-up of the determination cyclic pulse 63 just before the counter 61 is initialized.

In Fig. 9, such a description is employed for easy explanation that the counter output and the latch output are analog data, but these outputs are actually processed digitally as binary data of several bits. The output of the latch 64 is compared with a preset reference time and a determination is made that the inter-electrode is in a contacting state, only when the output of the latch 64 does not exceed the reference time. Since the contact determination is performed for each occurrence of the determination cyclic pulse 63, delay of at most one determination cycle occurs in the contact determination, but this delay may be reduced sufficiently as compared with the delay due to the smoothing time constant in the prior art.

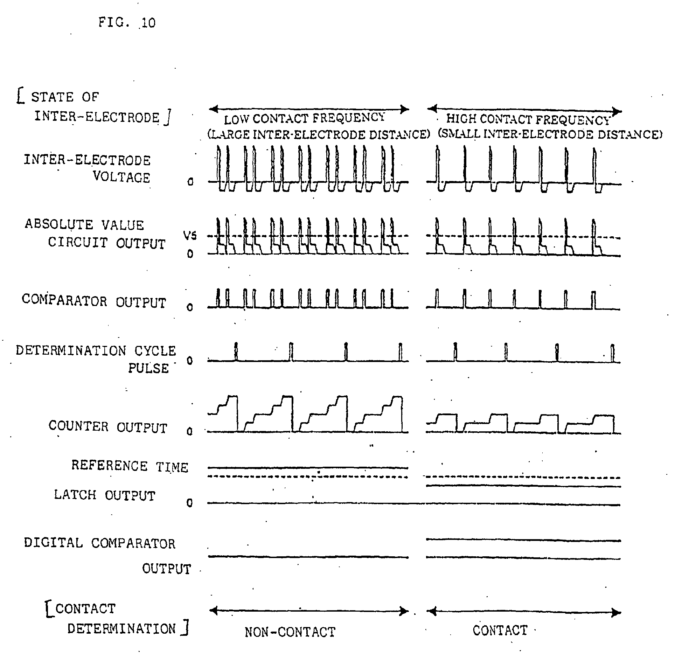

Fig. 10 is a diagram for explaining a contact detecting operation in the contact detecting apparatus of the present embodiment using voltage waveforms of circuit main portions shown in Figs. 7 and 8. There is a case where, when a wire and a work are opposed to each other via a slight distance, contact and non-contact are repeated due to wire vibrations or the like until the contact determination result is obtained after pulse application even when feeding of the table is stopped and the distance between electrodes, or an inter-electrode distance, is not changed. Such a repetition of contact and non-contact may occurs for every several pulse applications, or it may occur during one pulse application.

Fig. 10 illustrates a case where contact and non-contact are repeated for every several pulse applications, in which a left side block shows a case where the contact frequency is low while a right side block shows a case where the contact frequency is high. Also, when attention is paid to a distance between the wire and work, since the contact frequency is increased according to reduction in the distance, the left side block shows a case where the distance of the inter-electrode is large while the right side block shows a case where the distance of the inter-electrode is small.

In the left side block, pulse application is performed 6 times during a determination cycle, in which, since the inter-electrode is in a non-contact state at applications of 4 times of the 6 times, a voltage appears at these 4 times and the application times corresponding to the 4 times are accumulated in the counter so that this value is preserved with the output of the latch. On the other hand, in the right side block, a pulse is applied 6 times during a determination cycle, in which, since the inter-electrode is in a non-contact state at applications of 2 times of the 6 times, a voltage appears at these 2 times and the application time corresponding to the 2 times are accumulated in the counter so that this value is preserved in the output of the latch.

The left side block illustrates a situation where the contact frequency is about 33% because the inter-electrode is in a non-contact state 4 times of 6 times, while the right side block illustrates a situation where the contact frequency is about 66% because the inter-electrode is in a non-contact state 2 times of 6 times. In the example shown in Fig. 10, since the determination cycle is set to about 6 times the application cycle, the pulse application accumulation time corresponding to 6 times is preserved in the latch output in a case where the inter-electrode is in a complete non-contact state.

For example, when the reference time is set to 50% of the accumulation time, determination as to contact or non-contact can be made with a reference in which contact is made with the frequency of about 50%, so that it is made possible to determine the contacting state of the inter-electrode indicated by two contact frequencies reasonably. This means that a fine difference in distance of the inter-electrode can be determined. Therefore, even in a case where the contacting state of the inter-electrode is unstable due to vibrations of the wire or the like, the contact detection with a high accuracy can be achieved.

Now, in the above embodiment, the contact positioning function in a wire electric discharge machine has been explained, but if the present invention is applied to a case where an inter-electrode is constituted by a working electrode in a diemilling electric discharge machine and a material to be machined, it is applied to a contact detecting function in the diemilling electric discharge machine. In general, when the inter-electrode can be constituted by an object and an electrode movable relative to the object, the present invention can also be applied to an apparatus required for another contact detection. Incidentally, in this embodiment, all parts and members of the apparatus are constituted by hardware. However, since all data pieces to be processed in the contact determining means are all digital data pieces, it is possible to obtain the same determination result as that in the hardware configuration, by software using a micro-processor or a memory.

## Claims

1. A contact detecting apparatus which includes an object and an electrode movable relative to the object, the object and the electrode constituting an inter-electrode, comprising:
voltage applying means which applies a pulse-like voltage to the inter-electrode periodically;
voltage comparing means which compares a voltage of the inter-electrode with a predetermined reference voltage to output an output signal corresponding to the comparison result; and
contact determining means which monitors the output signal of the voltage comparing means for a predetermined time, clocks and accumulates the time when the output signal is being outputted, and compares the accumulated time with a predetermined reference time so that a determination is made about contact/non-contact of the electrode and the object.

2. The contact detecting apparatus according to claim 1, wherein at least one of the reference voltage and the reference time can be set to be variable.

3. A contact detecting apparatus for an electric discharge machine where a material to be machined is machined using a tool electrode, comprising:
voltage applying means which applies a pulse-like voltage between the tool electrode and the material to be machined periodically;
voltage comparing means which compares an inter-electrode voltage between the tool electrode and the material to be machined with a predetermined reference voltage to output an output signal corresponding to the comparison result;
contact determining means which monitors the output signal of the voltage comparing means for a predetermined time, clocks and accumulates the time when the output signal is being outputted, and compares the accumulated time with a predetermined reference time so that a determination is made about contact/non-contact of the electrode and the material to be machined.

4. The contact detecting apparatus for an electric discharge machine according to claim 3, wherein at least one of the reference voltage and the reference time can be set to be variable.
